# EUROPÄISCHE PATENTSCHRIFT

(11) **EP 2 115 845 B1**
(45) Veröffentlichungstag und Bekanntmachung des Hinweises auf die Patenterteilung: **26.08.2015**
(21) Anmeldenummer: 08708298.8
(22) Anmeldetag: 28.01.2008
(51) Int. Cl.: H02H 3/04

(54) **VORRICHTUNG ZUM ÜBERWACHEN VON ABLEITVORGÄNGEN IN EINEM LEITER EINES MITTEL- ODER HOCHSPANNUNGSSYSTEMS**
APPARATUS FOR MONITORING DISCHARGE PROCESSES IN A CONDUCTOR OF A MEDIUM-VOLTAGE OR HIGH-VOLTAGE SYSTEM
DISPOSITIF POUR SURVEILLER DES PROCESSUS DE DÉCHARGE DANS UN CONDUCTEUR D'UN SYSTÈME MOYENNE OU HAUTE TENSION

(30) Priorität: 01.02.2007 DE 102007005748
(43) Veröffentlichungstag der Anmeldung: 11.11.2009
(73) Patentinhaber: Siemens Aktiengesellschaft, 80333 München (DE)
(72) Erfinder: KLINGBEIL, Lars, 13187 Berlin (DE); OECHSLE, Walter, 90766 Fürth (DE)
(86) Internationale Anmeldenummer: PCT/EP2008/050980
(87) Internationale Veröffentlichungsnummer: WO 2008/092829

(56) Entgegenhaltungen:
- EP-A- 1 260 820

## Beschreibung

Die Erfindung betrifft eine Vorrichtung zum Überwachen von Ableitvorgängen in einem Leiter eines Mittel- oder Hochspannungssystems, die mindestens einen Wandler aufweist, der zur Erfassung eines im Leiter fließenden Stroms geeignet ist, wobei der mindestens eine Wandler mit einer Überwachungseinrichtung zur Überwachung des Ableitvorgangs in Verbindung steht.

Eine Vorrichtung dieser Art ist beispielsweise aus der WO 02/061904 A1 bekannt. Sie dient zum sog. Ableitermonitoring, bei dem ein im Leiter eines Mittel- oder Hochspannungssystems abfließender Strom überwacht wird.

Die Aufzeichnung bzw. Bewertung derartiger Stromstöße ist aus Sicht des Ableitermonitoring sehr wichtig. Die zu überwachenden Ableitvorgänge treten allerdings sehr selten auf und haben nur eine sehr kurze Dauer. Die typische Rückenhalbwertzeit der Stromstöße ist kleiner als 100 µs. Ihr Eintreten ist nicht vorhersehbar. Die Erfassung dieser Vorgänge erfordert leistungsfähige Rechnersysteme, insbesondere was die Digitalisierung, die Quantifizierung und die Bewertung anbelangt.

Der Erfindung liegt die Aufgabe zugrunde, eine Vorrichtung der eingangs genannten Art weiterzubilden. Es soll eine Überwachungsvorrichtung für Ableitvorgänge geschaffen werden, die in einem stromsparenden Passiv-Modus verharren kann, bis ein Ableitvorgang zu protokollieren ist. In diesem Falle soll die Vorrichtung in den Aktiv-Modus hochfahren können, um einen Ableitvorgang aufzeichnen zu können, auch wenn dieser nur eine sehr kurze Zeit dauert. Es soll dennoch der vollständige Ableitvorgang protokolliert werden können, auch wenn dieser bereits während einer "Aufweck-Phase" der Überwachungsvorrichtung stattfindet und evtl. am Ende derselben bereits abgeschlossen ist.

Die Lösung dieser Aufgabe durch die Erfindung ist bei einer Vorrichtung der eingangs genannten Art dadurch gekennzeichnet, dass zwischen dem Wandler und der Überwachungseinrichtung der Vorrichtung ein Auslöser angeordnet ist, der beim Überschreiten eines im Leiter fließenden Schwellenstroms die Überwachungseinrichtung von einem nicht zur Überwachung geeigneten Passiv-Modus in einen zur Überwachung geeigneten Aktiv-Modus versetzt, und dass zwischen dem Wandler und der Überwachungseinrichtung eine Speicherschaltung angeordnet ist, die den von der Überwachungseinrichtung zu überwachenden und/oder zu protokollierenden Ableitstrom speichert.

Ein wesentliches Merkmal der Erfindung ist mithin eine Speicherschaltung für den zu protokollierenden Strom, in der ein zu dem durch den Leiter fließenden Strom korrespondierendes Signal solange gespeichert wird, bis die Überwachungseinrichtung von einem "Stand-By"-Betrieb in einen aktiven Zustand hochgefahren ist. Dann wird das in der Speicherschaltung gespeicherte Signal aufgezeichnet.

Eine erste Fortbildung der Erfindung sieht vor, dass der Auslöser mit einem ersten Wandler und dass die Speicherschaltung mit einem zweiten Wandler in Verbindung steht. Hiernach sind also zwei separate Wandler vorgesehen, die an den Leiter gekoppelt sind und unabhängig voneinander den Auslöser bzw. die Speicherschaltung mit dem Stromsignal versorgen.

Mindestens ein Wandler kann als Stromwandler ausgebildet sein. Der Stromwandler kann einen Eisenkern aufweisen. Mindestens ein Wandler kann auch als eisenlose Magnetfeldsonde ausgebildet sein.

Die Speicherschaltung kann mindestens einen Widerstand und mindestens einen Kondensator aufweisen.

Ferner kann vorgesehen werden, dass zwischen dem Wandler und der Speicherschaltung ein Gleichrichter angeordnet ist. Der Gleichrichter kann hierbei ein Brückengleichrichter, insbesondere ein Zweiwegegleichrichter, sein. Er kann auch ein Einwegegleichrichter sein.

Weiterhin kann vorgesehen werden, dass zwischen dem Wandler und der Speicherschaltung eine Schutzbeschaltung angeordnet ist. Auch zwischen der Speicherschaltung und der Überwachungseinrichtung kann eine Schutzbeschaltung angeordnet sein.

Die Überwachungseinrichtung kann auch mit einer Entladeschaltung in Verbindung stehen, mit der die Speicherschaltungnach der Aufzeichnung des Ableitstroms - entladen werden kann.

Schließlich kann vorgesehen werden, dass die Überwachungseinrichtung einen Analog-Digital-Wandler und eine mit diesem in Verbindung stehende Referenz aufweist, um den zu protokollierende Ableitstrom in einfacher und an sich bekannter Weise aufnehmen zu können.

Mit dieser Ausgestaltung werden verschiedene Vorteile erreicht:

Die Vorrichtung zur Überwachung des Ableitvorgangs und insbesondere die Speicherschaltung sind so aufgebaut, dass sie keinerlei Versorgungsspannung benötigt und somit keinen Stromverbrauch hat. Dies unterstützt das Ziel einer stromsparenden Möglichkeit beim Ableitermonitoring.

Die Vorrichtung ist ständig und ohne Verzögerung einsatzbereit. Ableitströme können zuverlässig erfasst werden, auch wenn sie nur extrem kurze Zeit dauern. Dies ist die Voraussetzung für eine zuverlässige Überwachung und Erfassung der nur sporadisch auftretenden und nicht vorhersagbaren Ableitvorgänge.

Die Speicherschaltung ist so aufgebaut, dass sie von der Überwachungseinrichtung unabhängig ist. Dies schafft die Voraussetzung dafür, die Überwachungseinrichtung in einen angestrebten "Power-Save"-Modus zu versetzen.

Die Speicherschaltung kann die Speicherung des Stromstoßimpulses übernehmen, bis die Überwachungseinrichtung ihren Hochlauf vom "Power-Save"-Modus in den normalen Betriebszustand beendet hat und die weitere Bearbeitung durchführen kann. Dies ist eine wesentliche Voraussetzung dafür, die Überwachungseinrichtung in einen gewünschten stromsparenden "Power-Save"-Modus versetzen zu können, ohne Gefahr zu laufen, Teile des Ableitvorganges nicht erfassen zu können.

Die bevorzugt als Widerstands-Kondensator-Netzwerk ausgebildete Speicherschaltung ist so aufgebaut, dass es bereits eine Vorverarbeitung des zu erfassenden Signals vornehmen kann. Die Vorverarbeitung kann abhängig vom Verhältnis der Widerstände zum Kondensator so gestaltet sein, dass der Spitzenwert oder der Mittelwert des zu erfassenden Signals gebildet wird. Gegebenenfalls können auch zwei separate Speicherschaltungen für den Spitzenwert bzw. für den Mittelwert vorgesehen werden. Durch diese "analog-rechnerische" Vorverarbeitung reduziert sich die rechnerische Weiterverarbeitung durch die Überwachungseinrichtung. Dies trägt zur weiteren Optimierung des Stromverbrauchs der Vorrichtung bei.

Ableitvorgänge treten nur sehr selten auf und haben auch nur eine kurze Dauer. Aus diesem Grunde wird die Überwachungseinrichtung nur einen winzigen Bruchteil der gesamten Zeit benötigt. Diese Idle-Time beträgt hinsichtlich der Erfassung der Ableitvorgänge nahezu 100 %. Die Überwachungseinrichtung mit dem Analog-Digital-Wandler und der Referenz ist so aufgebaut, dass sie in der Zeit, in der sie nicht benötigt wird, in den "Power-Save"-Modus versetzt werden kann. Dies bedeutet eine Optimierung des Strombedarfs. Somit ist die Voraussetzung dafür geschaffen, eine sich selbst versorgende und wirtschaftliche Vorrichtung für die Überwachung von Ableitvorgängen zu realisieren.

Die Erfindung stellt für die Überwachung des Stroms ein stationäres und kompakt aufgebautes Gerät zur Verfügung, das am Ableiter angeordnet ist. Aus wirtschaftlichen Gründen ist es vorteilhaft, dass das Gerät über eine eigene unabhängige Stromversorgung verfügt. Diese kann eine Batterie oder eine Solarzelle sein; es ist auch eine Stromversorgung aus Ableiterleckströmen denkbar. Daher ist es von Vorteil, das Überwachungsgerät stromsparend betrieben werden kann (sog. "Intelligent and energy-self-sufficient sensor system").

Ein permanenter aktiver Zustand des Geräts, der - selbst bei Verwendung der stromsparendsten Schaltkreise (Mikrocontroller, Analog-Digital-Wandler, usw.) - viel Strom verbraucht, ist nicht erforderlich. Deshalb wird die vorgeschlagene Vorrichtung in einen stromsparenden Passiv-Modus versetzt, d. h. in einen "Power-Save-Mode" ähnlich eines "Stand-By"-Betriebs, in dem das Gerät nur einen minimalen Energieverbrauch hat (Stromflüsse von wenigen µA).

Die Hochlaufzeiten ("Wake-Up-Zeit"), um die Überwachungsvorrichtung von ihrem passiven in den aktiven Zustand zu versetzen, liegen je nach Schaltungsart im Bereich von 50 µs bis in den Millisekundenbereich hinein. Zumeist benötigen die notwendigen analogen Schaltungsteile, wie z. B. die Referenz eines Analog-Digital-Wandlers des Überwachungsgeräts, sehr viel Zeit für den Hochlauf und das Einschwingen in den stabilen Zustand.

Eine Vorrichtung der gattungsgemäßen Art, die wie erläutert sich in einem Power-Save-Modus befindet und beim Eintreten eines Ableitvorganges erst "aufgeweckt" werden muss und dann eine bestimmte Zeit zum Erreichen der vollen Betriebsbereitschaft benötigt, ist gemäß der Erfindung jedoch nicht problematisch, sondern die typischerweise nur kurz dauernden Ableitvorgänge können dennoch vollständig erfasst werden.

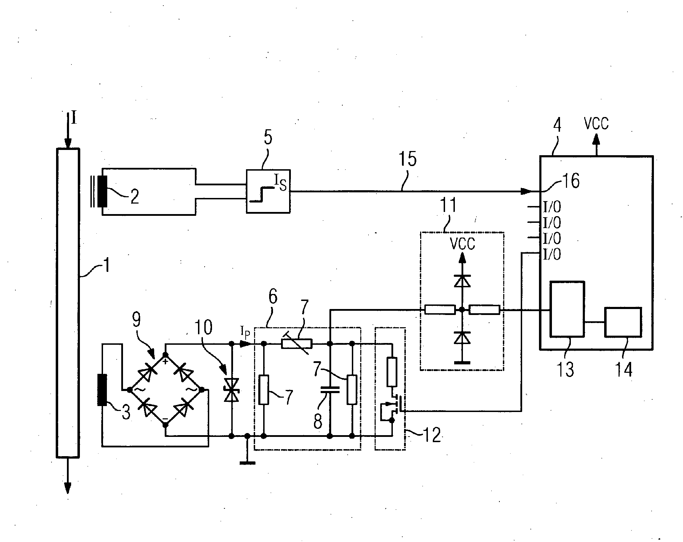

In der Zeichnung ist ein Ausführungsbeispiel der Erfindung dargestellt. Die einzige Figur zeigt schematisch eine Vorrichtung zum Überwachen von Ableitvorgängen in einem Leiter eines Mittel- oder Hochspannungssystems mit ihren Bauteilen.

In der Figur ist ein Leiter 1 eines Mittel- oder Hochspannungssystems zu sehen. Kommt es zu einem Ableitvorgang, fließt ein Stromstoß I durch den Leiter 1. Ein mit dem Leiter 1 induktiv gekoppelter Stromwandler 1 erfasst diesen Stromstoß I und wandelt ihn in ein analoges Spannungssignal um. Mit diesem Spannungssignal wird ein Auslöser 5 (Triggerschaltung) gespeist. Überschreitet der Stromstoß I eine vorgegebene Schwelle, d. h. einen Schwellenstrom Iₛ, erzeugt der Auslöser 5 ein aktives Triggersignal 15. Dieses Triggersignal 15 weckt eine Überwachungseinrichtung 4 aus einem "Stand-By"-bzw. "Power-Save"-Modus auf und überführt sie in einen aktiven, voll betriebsbereiten Zustand, in dem sie den Ableitstrom protokollieren kann; es findet also in der Überwachungseinrichtung 4 ein Hochlauf und eine Initialisierung statt.

Im Ausführungsbeispiel wird das Triggersignal 15 der Überwachungseinrichtung 4 an einem interrupt-fähigen Eingang 16 zugeleitet. Die Überwachungseinrichtung 4 selber weist einen leistungsfähigen Microcontroller auf. Dargestellt sind ein integrierter Analog-Digital-Wandler 13 sowie eine dafür benötigte analoge Referenz 14 (Referenzspannung).

Der Stromstoß I wirkt nicht nur auf den Stromwandler 2 sondern gleichzeitig auch auf einen zweiten Wandler 3, der im Ausführungsbeispiel als eisenlose Magnetfeldsonde ausgeführtist. Möglich ist es jedoch auch, dass der Wandler 3 als Stromwandler mit Eisenkern ausgebildet ist. Der im Leiter 1 fließende Strom I erzeugt ein proportionales magnetisches Feld um den Leiter 1, das vom Wandler 3 erfasst und in einen proportionalen Strom Ip umgewandelt wird.

Dieser Strom I_{P} wird durch einen Gleichrichter 9 gleichgerichtet und einer Speicherschaltung 6 zugeführt, die als Widerstands-Kondensator-Netzwerk ausgeführt ist. Der im Ausführungsbeispiel als Brückengleichrichter (Zweiwegegleichrichter) ausgebildete Gleichrichter 9 kann auch als Einwegegleichrichter ausgebildet sein. Bei Verwendung zweier getrennter Erfassungsschaltungen mit entgegengesetzter Gleichrichtung kann zwischen positiven und negativen Stromstößen unterschieden werden.

Die in der Speicherschaltung 6 enthaltenen Widerstände 7 und der Kondensator 8 bestimmen die Auflade- bzw. auch die Entladezeitkonstante der Speicherschaltung und damit die Höhe der Spannung am Kondensator 8, die durch den Strom I_{P} hervorgerufen wird. Der in der Speicherschaltung 6 vorhandene Kondensator 8 dient also als Speicherelement.

Die Spannung am Kondensator 8 wird dem Analog-Digital-Wandler 13 zugeführt. Nachdem die Überwachungseinrichtung 4 ihren Hochlauf und die Initialisierung durchgeführt und abgeschlossen hat, beginnt sie sofort mit der Digitalisierung der analogen Spannung am Kondensator 8 mittels des Analog-DigitalWandlers 13. Der gewonnene digitalisierte Spannungswert kann für die weitere Bearbeitung im Sinne des an sich bekannten Ableitermonitoring verwendet werden.

Ist der Ableitvorgang aufgezeichnet, kann der Kondensator 8 mit einer Entladeschaltung 12 schnell entladen werden, wobei die Aktivierung der Entladeschaltung 12 von der Überwachungseinrichtung 4 wie dargestellt erfolgt. Damit ist die Speicherschaltung 6 bereit für eine neue Speicherung eines Ableitvorgangs (Wiederbereitschaft der Erfassung).

Die dargestellte Überwachungseinrichtung 4 kann auch diskret aufgebaut sein, bestehend aus einem Controller und einem externen Analog-Digital-Wandler 13 und dazugehöriger Referenz 14.

Zum Schutz von Überspannungen sind Schutzbeschaltungen 10 und 11 vorgesehen, die zwischen dem Gleichrichter 9 und der Speicherschaltung 6 bzw. zwischen der Speicherschaltung 6 und der Überwachungseinheit 4 angeordnet sind. Die Schutzbeschaltungen 10 und 11 sollen die jeweils nachfolgenden Schaltungsteile vor Überspannung schützen. Allerdings sind die Schutzbeschaltungen 10, 11 für die Erfassung der Ableitvorgänge nicht erforderlich, sie stellen lediglich eine Erhöhung der Robustheit der Vorrichtung her.

Es ist auch - entgegen des Ausführungsbeispiels - möglich, dass die Wandler 2 und 3 zu einem einzigen Wandler zusammengefasst werden.

Die in der Speicherschaltung 6 angeordneten Widerstände 7 und der Kondensator 8 bestimmen, wie erläutert, die Auflade- bzw. auch die Entladezeitkonstante der Speicherschaltung 6, also des Netzwerks, und damit auch die Höhe der Spannung am Kondensator 8. Durch unterschiedliche Dimensionierung der Werte der Widerstände 7 und des Kondensators 8 kann die Erfassung der Ableitvorgänge so verändert werden, dass sie den Spitzenwert ("Peak-Hold") oder den Durchschnittswert ("Average") des Stromstoßes I erfasst. Es können auch zwei Erfassungen parallel aufgebaut werden, um beide Werte zu ermitteln. In diesem Falle können also z. B. zwei parallel angeordnete Speicherschaltungen 4 vorgesehen werden.

Nachdem die Überwachungseinrichtung 4 mit den dazugehörigen Schaltungsteilen 13, 14 mit der Digitalisierung der Spannung am Kondensator 8 begonnen hat, kann diese Spannung auch zyklisch im Sinne einer zeitlichen Abtastung digitalisiert werden. Bei konstantem und bekanntem Abtastintervall ergeben sich daraus weitere Möglichkeiten, die Spannungswerte im Sinne des Ableitermonitorings auszuwerten.

Zum einen kann die zeitliche Dauer des Ableitvorganges wie folgt bestimmt werden: Die Zeit vom aktiven Triggersignal 15 bis zur ersten Digitalisierung der Spannung am Kondensator 8 kann als bekannt und konstant (systemimmanent) vorausgesetzt werden. Die Anzahl der Abtastungen, bis ein Abklingen der Spannung am Kondensator 8 und damit des Stromstoßes I erkannt wird, kann bestimmt werden.

Zum anderen kann mit dem ermittelten Durchschnittswert und der ermittelten zeitlichen Dauer des Ableitvorganges das für das Ableitermonitoring interessante Energieäquivalent errechnet werden, d. h. wie viel Energie musste der Ableiter während des Ableitvorgangs aufnehmen (diese trägt wesentlich zu seiner Alterung bei).

Die Fähigkeit der Speicherschaltung 6, von der Überwachungseinrichtung 4 autark zu arbeiten und das erfasste Signal mit dem Kondensator 8 zu speichern, bis der Hochlauf der Überwachungseinrichtung 4 abgeschlossen ist, vereinfacht die Auswahl der Schaltkreise für die Überwachungseinrichtung 4 mit ihren Bestandteilen 13 und 14 wesentlich. Die oft kritische Hochlaufzeit, insbesondere der analogen Schaltungsteile, ist damit kein Ausschlusskriterium bei der Auswahl geeigneter Schaltkreise mehr. Das Augenmerk kann bei der Auswahl der Bestandteile der Vorrichtung vielmehr auf andere Eigenschaften gerichtet werden, die die rechnerische Leistungsfähigkeit bestimmen.

Die Verwendung eines Speichergliedes in Form des Kondensators 8 mit integrierender Eigenschaft ergänzt sich vorteilhaft mit der differenzierenden Eigenschaft des Wandler 3, der im Ausführungsbeispiel als induktiv arbeitende Magnetfeldsonde realisiert ist, um ein analoges Abbild des im Ableiter fließenden Stromstoßes I zu bilden. Dies unterstützt vorteilhaft das Konzept, eine Vorverarbeitung des zu erfassenden Signals außerhalb der Überwachungseinrichtung 4 durchzuführen.

Der Umstand, dass die Überwachungseinrichtung 4 erst nach ihrem Hochlauf mit der Digitalisierung der Spannung am Kondensator 8 beginnt, hat den weiteren Vorteil, dass der energiereiche Stromstoß I im Ableiter 1 schon abgeklungen ist, wenn mit der Digitalisierung begonnen wird. Die bei Ableitungsvorgängen möglichen Stromstöße können bis in den Bereich von 100 kA gehen. Damit verbunden sind hohe elektrische Feder, die die Elektronik, z. B. der empfindlichen Analog-Digial-Wandlung, stören können. Die zeitliche Staffelung der Verarbeitung vermeidet geschickt den sonst unausweichlichen Einfluss energiereicher Stromstöße durch Einkopplung (EMV) von Störungen. Eine räumliche Trennung des Wandler 3 und der Überwachungseinrichtung 4 (einschließlich der Teile 13 und 14) verbietet die angestrebte Wirtschaftlichkeit der Vorrichtung, weil in diesem Falle kein vorteilhafter kompakter Aufbau mehr möglich wäre. Aufgrund der erläuterten Arbeitsweise bedingt dies bei der vorgeschlagenen Lösung jedoch kein Problem.

### Bezugszeichenliste

- 1: Leiter
- 2: Wandler
- 3: Wandler
- 4: Überwachungseinrichtung
- 5: Auslöser
- 6: Speicherschaltung
- 7: Widerstand
- 8: Kondensator
- 9: Gleichrichter
- 10: Schutzbeschaltung
- 11: Schutzbeschaltung
- 12: Entladeschaltung
- 13: Analog-Digital-Wandler
- 14: Referenz
- 15: Triggersignal
- 16: interrupt-fähiger Eingang

- I: Strom
- I_{S}: Schwellenstrom
- I_{P}: proportionaler Strom

## Patentansprüche

1. Vorrichtung zum Überwachen von Ableitvorgängen in einem Leiter (1) eines Mittel- oder Hochspannungssystems, die mindestens einen Wandler (2, 3) aufweist, der zur Erfassung eines im Leiter (1) fließenden Stroms (I) geeignet ist, wobei der mindestens eine Wandler (2, 3) mit einer Überwachungseinrichtung (4) zur Überwachung des Ableitvorgangs in Verbindung steht,
**dadurch gekennzeichnet, dass** zwischen dem Wandler (2, 3) und der Überwachungseinrichtung (4) ein Auslöser (5) angeordnet ist, der beim Überschreiten eines im Leiter (1) fließenden Schwellenstroms (I_{S}) die Überwachungseinrichtung (4) von einem nicht zur Überwachung geeigneten Passiv-Modus in einen zur Überwachung geeigneten Aktiv-Modus versetzt, und zwischen dem Wandler (2, 3) und der Überwachungseinrichtung (4) mindestens eine Speicherschaltung (6) angeordnet ist, die den von der Überwachungseinrichtung (4) zu überwachenden und/oder zu protokollierenden Ableitstrom (I) speichert.

2. Vorrichtung nach Anspruch 1,
**dadurch gekennzeichnet, dass** der Auslöser (5) mit einem ersten Wandler (2) und dass die Speicherschaltung (6) mit einem zweiten Wandler (3) in Verbindung steht.

3. Vorrichtung nach Anspruch 1 oder 2,
**dadurch gekennzeichnet, dass** mindestens ein Wandler (2) als Stromwandler ausgebildet ist.

4. Vorrichtung nach Anspruch 3,
**dadurch gekennzeichnet, dass** der Stromwandler einen Eisenkern aufweist.

5. Vorrichtung nach Anspruch 1 oder 2,
**dadurch gekennzeichnet, dass** mindestens ein Wandler (3) als eisenlose Magnetfeldsonde ausgebildet ist.

6. Vorrichtung nach einem der Ansprüche 1 bis 5,
**dadurch gekennzeichnet, dass** die Speicherschaltung (6) mindestens einen Widerstand (7) und mindestens einen Kondensator (8) aufweist.

7. Vorrichtung nach einem der Ansprüche 1 bis 6,
**dadurch gekennzeichnet, dass** zwischen dem Wandler (3) und der Speicherschaltung (6) ein Gleichrichter (9) angeordnet ist.

8. Vorrichtung nach Anspruch 7,
**dadurch gekennzeichnet, dass** der Gleichrichter (9) ein Brückengleichrichter, insbesondere ein Zweiwegegleichrichter, ist.

9. Vorrichtung nach Anspruch 7,
**dadurch gekennzeichnet, dass** der Gleichrichter (9) ein Einwegegleichrichter ist.

10. Vorrichtung nach einem der Ansprüche 1 bis 9,
**dadurch gekennzeichnet, dass** zwischen dem Wandler (3) und der Speicherschaltung (6) eine Schutzbeschaltung (10) angeordnet ist.

11. Vorrichtung nach einem der Ansprüche 1 bis 10,
**dadurch gekennzeichnet, dass** zwischen der Speicherschaltung (6) und der Überwachungseinrichtung (4) eine Schutzbeschaltung (11) angeordnet ist.

12. Vorrichtung nach einem der Ansprüche 1 bis 11,
**dadurch gekennzeichnet, dass** die Überwachungseinrichtung (4) **mit** einer Entladeschaltung (12) in Verbindung steht, mit der die Speicherschaltung (6) entladen werden kann.

13. Vorrichtung nach einem der Ansprüche 1 bis 12,
**dadurch gekennzeichnet, dass** die Überwachungseinrichtung (4) einen Analog-Digital-Wandler (13) und eine mit diesem in Verbindung stehende Referenz (14) aufweist.

## Claims

1. Apparatus for monitoring discharge processes in a conductor (1) in a medium- or high-voltage system, which apparatus has at least one transformer (2, 3) which is suitable for detecting a current (I) flowing in the conductor (1), wherein the at least one transformer (2, 3) is connected to a monitoring device (4) for monitoring the discharge process,
**characterized in that**
the transformer (2, 3) and the monitoring device (4) have a release (5) arranged between them which, when a threshold current (I_{S}) flowing in the conductor (1) is exceeded, changes the monitoring device (4) from a passive mode, which is not suitable for monitoring, to an active mode, which is suitable for monitoring, and the transformer (2, 3) and the monitoring device (4) have at least one memory circuit (6) arranged between them which stores the discharge current (I) which is to be monitored and/or logged by the monitoring device (4).

2. Apparatus according to Claim 1,
**characterized in that**
the release (5) is connected to a first transformer (2) and **in that** the memory circuit (6) is connected to a second transformer (3).

3. Apparatus according to Claim 1 or 2,
**characterized in that**
at least one transformer (2) is in the form of a current transformer.

4. Apparatus according to Claim 3,
**characterized in that**
the current transformer has an iron core.

5. Apparatus according to Claim 1 or 2,
**characterized in that**
at least one transformer (3) is in the form of an ironless magnetic field probe.

6. Apparatus according to one of Claims 1 to 5,
**characterized in that**
the memory circuit (6) has at least one resistor (7) and at least one capacitor (8).

7. Apparatus according to one of Claims 1 to 6,
**characterized in that**
the transformer (3) and the memory circuit (6) have a rectifier (9) arranged between them.

8. Apparatus according to Claim 7,
**characterized in that**
the rectifier (9) is a bridge rectifier, particularly a full-wave rectifier.

9. Apparatus according to Claim 7,
**characterized in that**
the rectifier (9) is a half-wave rectifier.

10. Apparatus according to one of Claims 1 to 9,
**characterized in that**
the transformer (3) and the memory circuit (6) have a piece of protective circuitry (10) arranged between them.

11. Apparatus according to one of Claims 1 to 10,
**characterized in that**
the memory circuit (6) and the monitoring device (4) have a piece of protective circuitry (11) arranged between them.

12. Apparatus according to one of Claims 1 to 11,
**characterized in that**
the monitoring device (4) is connected to a discharge circuit (12) which can be used to discharge the memory circuit (6).

13. Apparatus according to one of Claims 1 to 12,
**characterized in that**
the monitoring device (4) has an analog/digital converter (13) and a reference (14) connected thereto.

## Revendications

1. Dispositif de contrôle de processus de décharge dans un conducteur (1) d'un système de moyenne tension ou de haute tension qui comporte au moins un convertisseur (2, 3) propre à détecter un courant (I) passant dans le conducteur (1), le au moins un convertisseur (2, 3) étant en liaison avec un dispositif (4) de contrôle du processus de décharge,
**caractérisé en ce que**
entre le convertisseur (2, 3) et le dispositif (4) de contrôle est disposé un déclencheur (5) qui, lors d'un dépassement d'un courant (I_{S}) de seuil passant dans le conducteur (1), fait passer le dispositif (4) de contrôle d'un mode passif ne convenant pas au contrôle à un mode actif convenant au contrôle et il disposé entre le convertisseur (2, 3) et le dispositif (4) de contrôle au moins un circuit (6) d'accumulation, qui accumule le courant (1) de décharge à contrôler par le dispositif (4) de contrôle et/ou à enregistrer.

2. Dispositif suivant la revendication 1,
**caractérisé en ce que**
le déclencheur (5) est en liaison avec un premier convertisseur (2) et **en ce que** le circuit (6) d'accumulation est en liaison avec un deuxième convertisseur (3).

3. Dispositif suivant la revendication 1 ou 2,
**caractérisé en ce que**
le au moins un convertisseur (2) est constitué sous la forme d'un transformateur de courant.

4. Dispositif suivant la revendication 3,
**caractérisé en ce que**
le transformateur de courant a un noyau de fer.

5. Dispositif suivant la revendication 1 ou 2,
**caractérisé en ce que**
au moins un convertisseur (3) est constitué sous la forme d'un détecteur de champ magnétique sans fer.

6. Dispositif suivant l'une des revendications 1 à 5,
**caractérisé en ce que**
le circuit (6) d'accumulation a au moins une résistance (7) et au moins un condensateur (8).

7. Dispositif suivant l'une des revendications 1 à 6,
**caractérisé en ce que**
un redresseur (9) est monté entre le convertisseur (3) et le circuit (6) d'accumulation.

8. Dispositif suivant la revendication 7,
**caractérisé en ce que**
le redresseur (9) est un redresseur à pont, notamment un redresseur à deux alternances.

9. Dispositif suivant la revendication 7,
**caractérisé en ce que**
le redresseur (9) est un redresseur à une alternance.

10. Dispositif suivant l'une des revendications 1 à 9,
**caractérisé en ce que**
un circuit (10) de protection est monté entre le convertisseur (3) et le circuit (6) d'accumulation.

11. Dispositif suivant l'une des revendications 1 à 10,
**caractérisé en ce que**
un circuit (11) de protection est monté entre le circuit (6) d'accumulation et le dispositif (4) de contrôle.

12. Dispositif suivant l'une des revendications 1 à 11,
**caractérisé en ce que**
le dispositif (4) de contrôle est en liaison avec un circuit (12) de décharge par lequel le circuit (6) d'accumulation peut être déchargé.

13. Dispositif suivant l'une des revendications 1 à 12,
**caractérisé en ce que**
le dispositif (4) de contrôle comporte un convertisseur (13) analogique-numérique et une référence (14) en liaison avec celui-ci.
